# EUROPEAN PATENT APPLICATION

(11) **EP 3 373 700 A1**
(43) Date of publication of application: **12.09.2018**
(21) Application number: 18159468.0
(22) Date of filing: 01.03.2018
(51) Int. Cl.: H05B 3/26, B33Y 80/00, B33Y 10/00, B33Y 30/00

(54) **METHOD AND APPARATUS FOR RESISTANCE HEATING ELEMENTS**

(30) Priority: 10.03.2017 US 201715456170
(71) Applicant: Rosemount Aerospace Inc., Burnsville MN 55306-4898 (US)
(72) Inventor: DARDONA, Sameh, South Windsor, CT 06074 (US)
(74) Representative: Dehns

(57) **Abstract**

An embodiment of an apparatus (10) includes a raw material deposition head (12) in communication with a working surface (14), an energy beam generator (26), a wire feed (18), and an ultrasonic head (20). The energy beam generator (16) is directed toward the working surface (14) for consolidating raw material (32) disposed on the working surface (14) by the raw material deposition head (12). The wire feed (18) dispenses pre-formed wire (46) to the raw material (50) consolidated on the working surface (14) by an energy beam from the energy beam generator (26). The ultrasonic head (20) is directed to embed the dispensed pre-formed wire (46) into the consolidated raw material (50).

## Description

### BACKGROUND

The disclosed subject matter relates generally to heating elements and more specifically to methods for making integral electro-thermal heating elements.

Heating circuits are used in many electro-thermal products including ice protection systems (de-icing and anti-icing) for aircraft. Circuits are conventionally made by photochemically etching metallic alloy foils on a substrate and subsequently built into electro thermal heater composites (foils are attached to substrates prior to etching). This method of manufacture suffers from insufficient repeatability due to over or under-etching, photoresist alignment issues, delamination of the photoresists, poor adhesion to the substrate, etc. Also, the process is quite time and labor-intensive and results in a significant amount of chemical waste.

### SUMMARY

An embodiment of an apparatus includes a powder raw material deposition head in communication with a working surface, an energy beam generator, a wire feed, and an ultrasonic head. The energy beam generator is directed toward the working surface for consolidating raw material disposed on the working surface by the deposition head. The wire feed dispenses pre-formed wire to the raw material consolidated on the working surface. The ultrasonic head is directed to embed the dispensed pre-formed wire into the consolidated raw material-.

An embodiment of a method includes providing a polyurethane-based substrate onto a working surface and feeding at least one pre-formed nickel alloy wire in a pattern over an exposed surface of the polyurethane substrate. The heating wire pattern is embedded into a matrix layer of the substrate by applying an ultrasonic head along the pattern of at least one pre-formed nickel alloy wire, thereby forming a heating element layer on the substrate.

An embodiment of a heating element includes an additively manufactured polyurethane-based substrate and a heating element layer. The heating element layer includes at least one pre-formed nickel alloy heating wire ultrasonically embedded into a matrix. The at least one pre-formed nickel alloy heating wire is arranged in at least one overlapping or intersecting pattern.

### BRIEF DESCRIPTION OF THE DRAWINGS

FIG. 1 is an apparatus for making workpieces with integral electrical heating element(s).
FIG. 2 is a flowchart describing steps of a method for making a workpiece with an integral electrical heating element.
FIG. 3 shows example layering of an integral heating element according to the apparatus and method.
FIG. 4 is an example construction of a heating element layer shown in FIG. 3.

### DETAILED DESCRIPTION

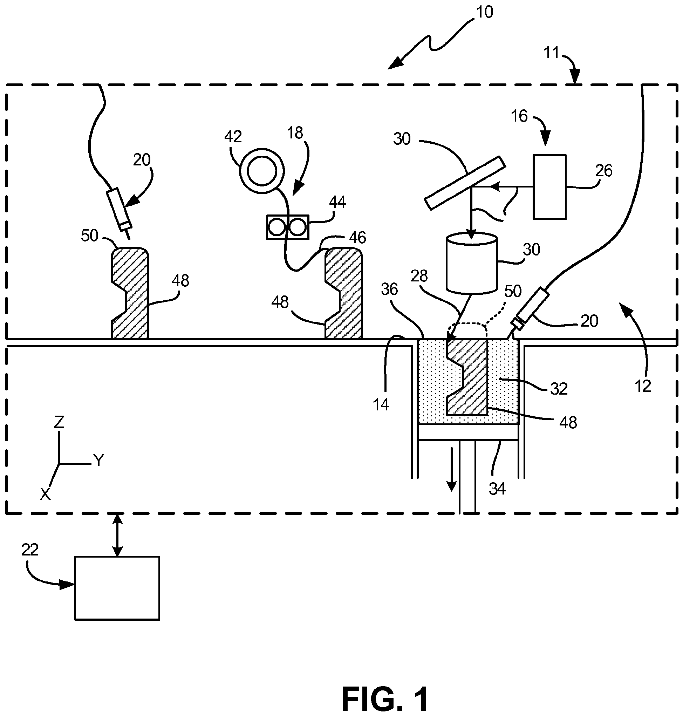

FIG. 1 is a schematic depiction of manufacturing apparatus 10, and generally includes chamber 11, raw material deposition unit 12, working surface 14, energy beam unit 16, wire feed 18, ultrasonic head 20, and controller 22. FIG. 1 includes workpieces at several stages of production which can be made in a continuous or batch process according to the disclosure.

In one example, apparatus 10, for example, can be derived from or based on a conventional or inventive additive manufacturing apparatus. Apparatus 10 includes chamber 11 containing devices that produce solid freeform objects by additive manufacturing. Additional modifications or adaptations to apparatus 10 can enable creation of embedded resistance heaters with complex substrate shapes and/or thermal patterns, examples of which are detailed below.

Embodiments of suitable additive manufacturing apparatus include but are not limited to those configured to perform direct laser sintering (DLS), direct laser melting (DLM), selective laser sintering (SLS), selective laser melting (SLM), laser engineering net shaping (LENS), electron beam melting (EBM), direct metal deposition (DMD) manufacturing, among others known in the art.

Manufacturing can be managed by controller 22, which may be configured to allow fully automatic, semi-automatic, or manual control of the additive manufacturing process in chamber 11. Chamber 11 can be provided with an environment required to produce flaw free solid freeform objects having structural integrity, dimensional accuracy, and required surface finish. In certain embodiments, a protective partial pressure or vacuum atmosphere may be required for some or all of the deposition and consolidation processes. This may be under the control of controller 22 or a separate environmental controller (not shown).

During operation, raw material 32, such as a powder, filament, or both, is fed to working surface 14, after which energy beam generator 26 is activated. Energy beam unit 16 includes one or more energy beam generators 26 to create one or more energy (e.g., laser, electron, etc.) beams 28, which can be directed (e.g., via controller 22 and/or optical elements 30) to consolidate layers of raw material 32 disposed on working surface 14 by deposition unit 12.

Steering of beam 28 allows for consolidation (e.g., sintering) of selected areas of raw material 32 to form individual build layers of workpiece 48. This adheres the consolidated areas to the underlying platform (or a preceding build layer) according to a computer model of workpiece 48 stored in a CAD, an STL, or other memory file accessible by controller 22 (or another controller as appropriate). After each consolidation pass, build platform 34 indexes down by one layer thickness and the process repeats for each successive build surface 36 until solid freeform workpiece 48 is completed. This is only one example of solid freeform / additive manufacturing apparatus and is not meant to limit the invention to any single machine known in the art.

Wire feed 18 can include, for example, one or more spools 42 and guide 44 arranged adjacent to working surface 14 for dispensing pre-formed wire 46 following CAD designs to create an embedded functional heating element. Pre-formed wire 46 is directed to workpiece 48 with one or more layers of consolidated raw material 50, which had been previously formed on working surface 14. Following the fed wire 46, ultrasonic head 20 is directed and controlled to embed the dispensed pre-formed wire 46 into layer(s) of consolidated raw material 50.

Apparatus 10, in certain embodiments, can also include means for attaching and metallurgically bonding a copper bus (not shown) to the embedded wire, in order to provide electrical current thereto. This can be, for example, a copper foil or a copper mesh embedded into the substrate (e.g., consolidated material 50) and laser welded to the alloy heating element.

Controller 22 can be configured to operate powder deposition unit 12, energy beam generator 26, wire feed 44, and ultrasonic head 20 in a sequence suitable for forming a resistance heater according to the disclosure. In certain embodiments, one can configure the controller to further operate the additive elements of the apparatus (e.g., powder deposition unit and energy beam generator) to form an encapsulation layer over the embedded wire layer (heater layer) without moving the part to a new machine or workstation, reducing opportunities for contamination.

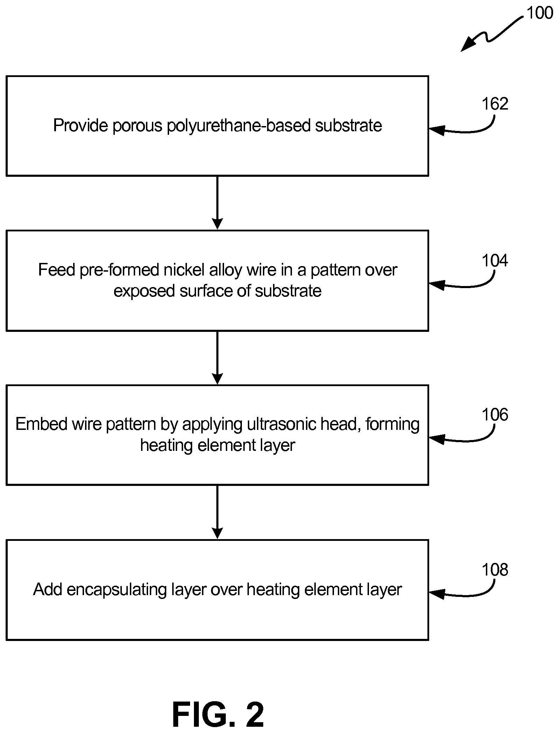

FIG. 2 shows steps for basic operational method 100 (for apparatus 10) as follows. At step 102, a porous polyurethane-based substrate is provided onto a working surface, such as by an additive manufacturing apparatus.

The additive manufacturing process can optionally include incorporating thermally conductive nanofillers into the porous polyurethane-based substrate to increase thermal conductivity of the substrate relative to a pure polyurethane substrate. The additive manufacturing process can be performed using a raw material deposition head and an energy beam directed to a working surface onto which the raw material is arranged.

Step 104 includes feeding at least one pre-formed nickel alloy wire in a pattern over an exposed surface of the porous polyurethane substrate following CAD designs to create an embedded functional heating element. This can also include means for attaching a copper-alloy bus to the embedded heating wire pattern. The copper-alloy bus, such as but is not limited to a copper foil and/or high-density mesh welded or otherwise metallurgically bonded to the embedded wire for providing electrical current thereto. In certain embodiments, the bus is joined by one or more conductive adhesives.

This is followed by step 106 in which the heating wire pattern(s) are embedded into the porous substrate by applying an ultrasonic head along the at least one fed wire pattern, thereby forming a heating element layer. As in FIG. 1, a controller can be configured to operate one or more of the raw material deposition head, the energy beam, the wire feed, and the ultrasonic head in a sequence suitable for forming a resistance heater pattern. Optional step 108 also includes adding an encapsulating layer over the heating element layer.

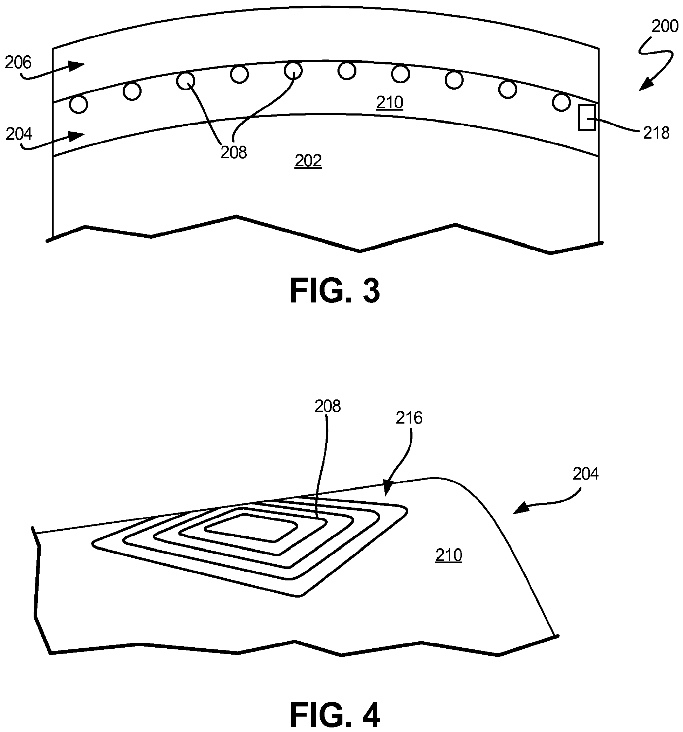

FIGS. 3 and 4 show a heating element formed according to the above apparatus / method. Referring first to FIG.3, heater 200 includes substrate 202, at least one heating element layer 204, and optional encapsulation layer 206.

Moving to heating element layer 204, this can include at least one pre-formed nickel alloy heating wire 208 ultrasonically embedded into matrix 210 in at least one overlapping or intersecting pattern. Matrix 210 can generally be an additively manufactured porous polyurethane-based substrate, and can optionally include thermally conductive nanofillers incorporated into the substrate to increase thermal conductivity of the substrate relative to a pure polyurethane substrate. Non-limiting examples of nanofillers can include electrically insulating oxides and nitrides such as silicon nitride, aluminum oxide and/or zirconia, among others. Optional encapsulating layer 206 can be disposed over the heating element layer, and can also optionally include nanofillers to optimize thermal conductivity. Copper-alloy bus 218 can be welded or otherwise fused along an edge of the embedded heating wire pattern for providing electrical current thereto. As seen primarily in FIG. 4, embedded heating wire pattern 216 is selected to provide substantially uniform temperature in heating element layer 204 and optional encapsulating layer 206.

The disclosed apparatus and process implement a combination of additive manufacturing and ultrasonic heating and pressing methods to directly embed electrothermal components onto virtually any additively manufactured non-metallic substrate, overcoming many of the limitations associated with conventional photochemical etching. This results in topology optimized heater circuit(s) resulting in significantly less weight and size, and enables the creation of complex structures tailored to many different applications. One possible application can be to create lightweight parts with precisely engineered thermal and electrical properties that can increase heating efficiency, reduce weight and optimize power variation. The apparatus and method can utilize existing commercial resistance heating nickel alloy wires (NiCr, NiCu) and ultrasonic power modulation to manufacture, e.g., heating and deicing elements for aircraft or other vehicles.

Ultrasonic tools provide local melting of substrate materials by heating the alloy wire and simultaneously pressing on it to form a true mechanical bond between the wire and the substrate/matrix. 3D printed substrates are preferred for ultrasonic embedding as they usually contain (or can be easily tailored to contain) porosity that enables embedding of the wires without displacing materials into the surface. Additionally, the available porosity allows for operating the ultrasonic unit at lower energy than would otherwise be required, for example, in an injection molded part. Improved device efficiency can also be achieved through tailoring of thermal properties in the substrate, matrix, and/or and encapsulating layer through the inclusion of nano and micro fillers during 3D printing.

### DISCUSSION OF POSSIBLE EMBODIMENTS

The following are non-exclusive descriptions of possible embodiments of the present invention.

An embodiment of an apparatus includes a raw material deposition head in communication with a working surface, an energy beam generator, a wire feed, and an ultrasonic head. The energy beam generator is directed toward the working surface for consolidating raw material disposed on the working surface by the raw material deposition head. The wire feed dispenses pre-formed wire to the raw material consolidated on the working surface by an energy beam from the energy beam generator. The ultrasonic head is directed to embed the dispensed pre-formed wire into the consolidated raw material.

The apparatus of the preceding paragraph can optionally include, additionally and/or alternatively, any one or more of the following features, configurations and/or additional components:
An apparatus according to an exemplary embodiment of this disclosure, among other possible things includes a raw material deposition head in communication with a working surface; an energy beam generator directed toward the working surface for consolidating raw material disposed on the working surface by the raw material deposition head; a wire feed for dispensing pre-formed wire to the raw material consolidated on the working surface by an energy beam from the energy beam generator; and an ultrasonic head directed to embed the dispensed pre-formed wire into the consolidated raw material.

A further embodiment of the foregoing apparatus, wherein the raw material deposition unit, the working surface, and the energy beam generator define an additive manufacturing apparatus.

A further embodiment of any of the foregoing apparatus, further comprising means for attaching a copper-alloy bus to the embedded wire, the copper alloy bus to provide electrical current to the embedded wire.

A further embodiment of any of the foregoing apparatus, further comprising: a controller configured to operate one or more of the raw material deposition unit, the energy beam generator, the wire feed, and the ultrasonic head in a sequence suitable for forming an electrical resistance heating layer embedded in a substrate.

A further embodiment of any of the foregoing apparatus, wherein the controller is configured to further operate the raw material deposition head and the energy beam to form an encapsulation layer over the electrical resistance heating layer.

An embodiment of a method includes providing a polyurethane-based substrate onto a working surface and feeding at least one pre-formed nickel alloy wire in a pattern over an exposed surface of the polyurethane substrate. The heating wire pattern is embedded into a matrix layer of the substrate by applying an ultrasonic head along the pattern of at least one pre-formed nickel alloy wire, thereby forming a heating element layer on the substrate.

A method according to an exemplary embodiment of this disclosure, among other possible things includes providing a polyurethane-based substrate onto a working surface; feeding at least one pre-formed nickel alloy wire in a pattern over an exposed surface of the polyurethane substrate; and embedding the heating wire pattern into a matrix layer of the substrate by applying an ultrasonic head along the pattern of at least one pre-formed nickel alloy wire, thereby forming a heating element layer on the substrate.

The method of the preceding paragraph can optionally include, additionally and/or alternatively, any one or more of the following features, configurations and/or additional components:
A further embodiment of the foregoing method, wherein at least a matrix portion of the heating element layer is formed in an additive manufacturing process.

A further embodiment of any of the foregoing methods, wherein the additive manufacturing process includes incorporating thermally conductive nanofillers into the matrix portion to increase thermal conductivity of the heating element layer relative to the polyurethane-based substrate.

A further embodiment of any of the foregoing methods, wherein the additive manufacturing process is performed using a raw material deposition head and an energy beam directed to a working surface.

A further embodiment of any of the foregoing methods, further comprising: adding an encapsulating layer over the heating element layer.

A further embodiment of any of the foregoing methods, further comprising: metallurgically bonding a copper-alloy bus to the embedded heating wire pattern, the copper alloy bus providing electrical current to the embedded wire.

A further embodiment of any of the foregoing methods, further comprising: configuring a controller to operate at least one of the raw material deposition head, the energy beam, the wire feed, and the ultrasonic head in a sequence suitable for forming the heating element layer.

An embodiment of a heating element includes an additively manufactured polyurethane-based substrate and a heating element layer. The heating element layer includes at least one pre-formed nickel alloy heating wire ultrasonically embedded into a matrix. The at least one pre-formed nickel alloy heating wire is arranged in at least one overlapping or intersecting pattern.

The heating element of the preceding paragraph can optionally include, additionally and/or alternatively, any one or more of the following features, configurations and/or additional components:
A heating element according to an exemplary embodiment of this disclosure, among other possible things includes an additively manufactured polyurethane-based substrate; and a heating element layer including at least one pre-formed nickel alloy heating wire ultrasonically embedded into a matrix, the at least one pre-formed nickel alloy heating wire arranged in at least one overlapping or intersecting pattern.

A further embodiment of the foregoing heating element, further comprising thermally conductive nanofillers incorporated into the matrix to increase thermal conductivity of the heating element layer relative to the polyurethane-based substrate.

A further embodiment of any of the foregoing heating elements, further comprising: an encapsulating layer disposed over the heating element layer.

A further embodiment of any of the foregoing heating elements, further comprising: a copper-alloy bus metallurgically bonded to the embedded heating wire pattern for providing electrical current thereto.

A further embodiment of any of the foregoing heating elements, wherein the embedded heating wire pattern is selected to provide substantially uniform temperature around the substrate.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An apparatus comprising:
a raw material deposition head in communication with a working surface;
an energy beam generator directed toward the working surface for consolidating raw material disposed on the working surface by the raw material deposition head;
a wire feed for dispensing pre-formed wire to the raw material consolidated on the working surface by an energy beam from the energy beam generator; and
an ultrasonic head directed to embed the dispensed pre-formed wire into the consolidated raw material.

2. The apparatus of claim 1, wherein the raw material deposition unit, the working surface, and the energy beam generator define an additive manufacturing apparatus.

3. The apparatus of claim 1 or 2, further comprising:
means for attaching a copper-alloy bus to the embedded wire, the copper alloy bus to provide electrical current to the embedded wire.

4. The apparatus of claim 1, 2 or 3, further comprising:
a controller configured to operate one or more of the raw material deposition unit, the energy beam generator, the wire feed, and the ultrasonic head in a sequence suitable for forming an electrical resistance heating layer embedded in a substrate,
wherein, optionally, the controller is configured to further operate the raw material deposition head and the energy beam to form an encapsulation layer over the electrical resistance heating layer.

5. A method comprising:
providing a polyurethane-based substrate onto a working surface;
feeding at least one pre-formed nickel alloy wire in a pattern over an exposed surface of the polyurethane substrate; and
embedding the heating wire pattern into a matrix layer of the substrate by applying an ultrasonic head along the pattern of at least one pre-formed nickel alloy wire, thereby forming a heating element layer on the substrate.

6. The method of claim 5, wherein at least a matrix portion of the heating element layer is formed in an additive manufacturing process.

7. The method of claim 6, wherein the additive manufacturing process includes incorporating thermally conductive nanofillers into the matrix portion to increase thermal conductivity of the heating element layer relative to the polyurethane-based substrate.

8. The method of claim 6 or 7, wherein the additive manufacturing process is performed using a raw material deposition head and an energy beam directed to a working surface.

9. The method of any of claims 5 to 8, further comprising:
adding an encapsulating layer over the heating element layer, and/or
further comprising:
metallurgically bonding a copper-alloy bus to the embedded heating wire pattern, the copper alloy bus providing electrical current to the embedded wire.

10. The method of any of claims 5 to 9, further comprising:
configuring a controller to operate at least one of the raw material deposition head, the energy beam, the wire feed, and the ultrasonic head in a sequence suitable for forming the heating element layer.

11. A heating element comprising:
an additively manufactured polyurethane-based substrate; and
a heating element layer including at least one pre-formed nickel alloy heating wire ultrasonically embedded into a matrix, the at least one pre-formed nickel alloy heating wire arranged in at least one overlapping or intersecting pattern.

12. The heating element of claim 11, further comprising thermally conductive nanofillers incorporated into the matrix to increase thermal conductivity of the heating element layer relative to the polyurethane-based substrate.

13. The heating element of claim 11 or 12, further comprising:
an encapsulating layer disposed over the heating element layer.

14. The heating element of any of claims 11 to 13, further comprising:
a copper-alloy bus metallurgically bonded to the embedded heating wire pattern for providing electrical current thereto.

15. The heating element of any of claims 11 to 14, wherein the embedded heating wire pattern is selected to provide substantially uniform temperature around the substrate.
